# EUROPEAN PATENT APPLICATION

(11) **EP 3 143 881 A1**
(43) Date of publication of application: **22.03.2017**
(21) Application number: 16382072.3
(22) Date of filing: 23.02.2016
(51) Int. Cl.: A23L 21/10, A23G 3/34, A23G 3/02, A23G 3/38, A23G 3/42, A23G 3/44, A23G 3/50, A23G 3/36, A23L 29/231, A23L 29/281, A23L 29/30, A23L 33/175, A23L 33/28, A23L 33/26, A23L 33/125

(54) **METHOD FOR PRODUCING GUMMY CANDY AND GUMMY CANDY WITH FUNCTIONAL INGREDIENTS**

(30) Priority: 21.09.2015 ES 201531346
(71) Applicant: Nutris Ingredients, S.L., 28022 Madrid (ES)
(72) Inventor: DE LA FUENTE BLASCO, Pedro, 28022 MADRID (ES)
(74) Representative: González López-Menchero, Álvaro Luis

(57) **Abstract**

Production method which comprises the steps:
- Preparing the mass of the gummy candy by means of the mixture of sugar, glucose syrup, water and gelatin. In the case of sugar-free gummy candies, preparing the mass with polyols and/or polydextrose, water and gelatin and/or pectin,
- Preparing a mixture of aromas, flavorings and other excipients which interfere with the organoleptic qualities of the gummy candy as well as with the pH,
- Mixing both masses into one single mass called the "final mixture",
- Diluting functional ingredients into a liquid medium,
- Adding pH correctors to the previous dilution,
- Incorporating the previous dilution in the mixture of the mass of gummy candy when the temperature of the latter is below 80 °C,
- Depositing this mixture on trays with a starch base,
- Drying the filled molds,
- Demolding the gummy candy.

Another object of the invention is a gummy candy which has functional ingredients that have healthy aspects for the human or animal body.

## Description

### OBJECT OF THE INVENTION

The object of the present invention, as the title of the invention states, is a method for producing a gummy candy with functional ingredients as well as to a gummy candy with functional ingredients.

The present invention is characterized by the steps of the method and particularly the dilution of the functional ingredients in a medium with suitable additional additives added at a convenient time and temperature to allow for the final state and flavor of the gummy candy such that the ingredients do not degrade and the organoleptic characteristic of the gummy candy is maintained.

The present invention is therefore circumscribed within the scope of manufacturing gummy candy type candies.

### BACKGROUND OF THE INVENTION

Gummy candies are very sweet chewable candies made from gelatins and/or pectins to which food sweeteners, flavorings and colorants are added. They have a finishing so that they do not stick to each other, consisting of a coating based on vegetable oils or sugar or polyols or amino acids such as glycine. They have countless shapes: small bears or other animals, cola bottles, rings, various fruits, etc.

Hitherto gummy candies with functional ingredients responsible for healthy activity are not known because the inclusion of the same entails a modification of the solubility of the mass and of the pH which entails a further hindrance to the final gelification of the mixture.

It is therefore an object of the present invention to develop a method for producing gummy candies with healthy functional ingredients which do not entail significant modification of the solubility of the mass and of the pH, or any hindrance in the gelification process during the manufacturing of the gummy candies, developing a process such as the one described below, the essentiality of which is included in the first claim.

### DESCRIPTION OF THE INVENTION

The objective of the present invention is a method for producing gummy candies which comprises the steps of:
- On the one hand, the mass, which is going to constitute the gummy candy, is firstly prepared by means of the mixture of sugar, glucose syrup, water and gelatin or pectin. In the case of sugar-free gummy candies, the sugars are substituted by polyols or polydextrose. The exact amounts of each ingredient are not always the same, but each factory plays with determined proportions which in the end result in a texture, consistency and organoleptic qualities specific to the gummy candy.
- On the other hand, in a complementary manner, a mixture is also prepared with aromas, flavors and other excipients which interfere with the organoleptic qualities of the gummy candy as well as with the pH which is fundamental for the gummy candy to ultimately gelify and be consistent.
- Both masses are then mixed into one single mass called "final mixture".
- Depositing this mixture on trays with a starch base on which the molds of the gummy candies have been previously placed by way of a machine called Mogul. The molds are the shapes, that is to say, small bears, fruits, etc. These molds are filled with the mass.
- Drying of the filled molds in rooms where the humidity and the temperature are controlled until the gummy candy can be demolded.
- Demolding the gummy candy.
- Packaging the gummy candies once they have been demolded.

All of the above steps can be called standard steps for producing gummy candies; when it is desired to include functional ingredients responsible for a healthy activity such as for example to help reduce cholesterol or increase the levels of omega 3, omega 9, etc., a novel dilution is added which is added to the mixture once it has been prepared and prior to the gelification and below a determined temperature.

The functional ingredients which are used in order to be included in the mixtures are common ingredients, however these ingredients must comply with specific pharmaceutical characteristics and in the majority of cases, they have not been previously included in a gummy candy, therefore the final gummy candy product with functional ingredients is novel.

Unless otherwise indicated, all the technical and scientific elements used in the present specification have the significance that the average person skilled in the art, to which this invention belongs, normally understands. In putting the present invention into practice, similar methods and materials or equivalents to those described in the specification can be used.

Throughout the description and the claims, the word "comprises" and the variants thereof do not intend to exclude other technical characteristics, additions, components or steps. For the person skilled in the art, other objectives, advantages and characteristics of the invention will be deduced in part from the description and in part from the practice of the invention.

### PREFERRED EMBODIMENT OF THE INVENTION

A possible embodiment of the gummy candy object of the invention comprises the steps of:
- The mass of the gummy candy firstly being prepared by means of the mixture of sugar, glucose syrup, water and gelatin and/or pectin.
- Additionally, a mixture of aromas, flavorings and other excipients being prepared which interfere with the organoleptic qualities of the gummy candy as well as with the pH, which is fundamental for the gummy candy to ultimately gelify and be consistent.
- Both masses then being mixed into one single mass called the "final mixture".
- Functional ingredients being diluted into a liquid medium, preferably but in a non-limiting manner, water, oil also being capable of being used.
- Adding pH correctors to the previous dilution with the aim of not hindering the pH of the mixture and hindering the gelling.
- Incorporating the previous dilution in the mixture of the mass of gummy candy when the temperature of the latter is below 80 °C.
- Depositing this mixture (mass of gummy candy and dilution with functional elements) on trays with a starch base on which the molds of the gummy candies have been previously placed by way of a machine called Mogul. The molds are the shapes, that is to say, small bears, fruits, etc. These molds are filled with the mass.
- Drying the filled molds in rooms where the humidity and the temperature are controlled until the gummy candy can be demolded.
- Demolding the gummy candy.

A gummy candy with functional ingredients is also an objective of the invention, said gummy candy comprising:
- sugar, glucose syrup, water, gelatin and/or pectin,
- polyols, water, gelatin and/or pectin (low sugar gummy candy or sugar-free gummy candy),
- polydextrose, water, gelatin and/or pectin (low sugar gummy candy or sugar-free gummy candy),
- aromas, flavorings and other excipients which interfere with the organoleptic qualities of the gummy candy as well as with the pH,
- functional ingredients,
- pH correctors.

The embodiments which can be obtained include: a sugar-free gummy candy with amino acids (tryptophan, glycine, etc.) suitable for diabetics and which assists in combating anxiety during periods of dieting. Gummy candies with additives for reducing cholesterol or for supplying active ingredients or products such as omega 3.

With the nature of the present invention sufficiently described as well as the manner of putting it into practice, it must be stated that, within the essentiality thereof, it can be carried out in practice in other embodiments which differ in detail from that indicated by way of example and to which the protection sought similarly extends, provided that the fundamental principle thereof is not altered, changed or modified.

## Claims

1. A method for producing gummy candies with functional ingredients, **characterized in that** it comprises:
- The mass of the gummy candy firstly being prepared by means of the mixture of sugar, glucose syrup, water and gelatin and/or pectin or in the case of sugar-free gummy candy, with polyols and/or polydextrose, water, gelatin and/or pectin,
- Additionally, a mixture of aromas, flavorings and other excipients being prepared which interfere with the organoleptic qualities of the gummy candy as well as with the pH, which is fundamental for the gummy candy to ultimately gelify and be consistent,
- Both masses then being mixed into one single mass called the "final mixture",
- Functional ingredients being diluted into a liquid medium, where the functional ingredients are responsible for a healthy activity such as for example helping to reduce cholesterol or to increase the levels of omega 3, omega 9,
- Adding pH correctors to the previous dilution with the aim of not hindering the pH of the mixture and hindering the gelling,
- Incorporating the previous dilution in the mixture of the mass of gummy candy when the temperature of the latter is below 80 °C,
- Depositing this mixture (mass of gummy candy and dilution with functional elements) on trays with a starch base on which the molds of the gummy candies have been previously placed, the molds being the shapes, that is to say, small bears, fruits, etc., and filling these molds with the mass,
- Drying the filled molds in rooms where the humidity and the temperature are controlled until the gummy candy can be demolded,
- Demolding the gummy candy.

2. The method for producing gummy candies with functional ingredients according to claim 1, **characterized in that** the liquid medium in which the functional ingredients are diluted is water or oil.

3. A gummy candy with functional ingredients, **characterized in that** it comprises:
- sugar, glucose syrup, water, gelatin and/or pectin,
- in the case of sugar-free gummy candy, polyols and/or polydextrose, water, gelatin and/or pectin,
- aromas, flavorings and other excipients which interfere with the organoleptic qualities of the gummy candy as well as with the pH,
- functional ingredients,
- pH correctors.
